# EUROPÄISCHE PATENTSCHRIFT

(11) **EP 3 231 544 B1**
(45) Veröffentlichungstag und Bekanntmachung des Hinweises auf die Patenterteilung: **26.08.2020**
(21) Anmeldenummer: 17166719.9
(22) Anmeldetag: 14.04.2017
(51) Int. Cl.: B23B 51/04

(54) **EJEKTOR-TIEFBOHRWERKZEUG**
EJECTOR DEEP DRILLING TOOL
ÉJECTEUR-OUTIL À FORER DES TROUS PROFONDS

(30) Priorität: 15.04.2016 EP 16165669
(43) Veröffentlichungstag der Anmeldung: 18.10.2017
(73) Patentinhaber: WFL Millturn Technologies GmbH & Co. KG, 4030 Linz (AT)
(72) Erfinder: Koll, Reinhard, 4040 Lichtenberg (AT)
(74) Vertreter: Jell, Friedrich

(56) Entgegenhaltungen:
- DE-A1- 2 252 703
- JP-U- H0 215 203
- SU-A1- 1 197 777
- SU-A2- 666 004
- SU-A2- 891 233
- US-A- 1 940 220

## Beschreibung

Die Erfindung betrifft ein Ejektor-Tiefbohrwerkzeug gemäß dem Oberbegriff des Anspruchs 1. Ein solches Ejektor-Tiefbohrwerkzeug ist zum Beispiel aus der DE 12 90 026 B bekannt.

Um die Schwingungsneigung eines Ejektor-Tiefbohrwerkzeugs beim Bohren zu reduzieren, ist es aus dem Stand der Technik bekannt (EP0090929A2), am Bohrrohr des Tiefbohrwerkzeugs außen einen Schwingungsdämpfer vorzusehen. Hierfür ist der Schwingungsdämpfer als Hülse ausgeführt, welcher am Bohrkopf des Bohrrohrs anliegt. Nachteilig erschweren zwischen Werkstück und Spannelemente des Tiefbohrwerkzeugs befindliche Schwingungsdämpfer die Handhabung des Werkzeugs beim Tiefenbohren - und zwar, indem beispielsweis stets auf eine Kollisionsfreiheit des Schwingungsdämpfers gegenüber dem Werkzeug geachtet werden muss. Zudem verringert solch ein Schwingungsdämpfer die erreichbar Bohrtiefe des Ejektor-Tiefbohrwerkzeugs. Außerdem bedarf es bei der konstruktiven Ausführung des Schwingungsdämpfers einer besonders exakten Ausbildung der berührenden Bereiche mit dem Tiefbohrwerkzeug, um zum einen das Führungsverhalten des Tiefbohrwerkzeugs beim Tiefbohren nicht zu beeinflussen, und zum anderen, um eine ausreichende Berührung des Tiefbohrwerkzeugs zu gewährleisten, damit Schwingungen des Tiefbohrwerkzeugs gedämpft werden können.

Zudem ist aus der DE1290026B ist ein Tieflochbohrer bekannt, dessen Ringraum zur Zufuhr und Führung eines Kühl/Schmiermittels zum Bohrkopf durch einen Keil begrenzt wird.

Die Erfindung hat sich daher die Aufgabe gestellt, ein Ejektor-Tiefbohrwerkzeug der eingangs geschilderten Art konstruktiv derart zu verbessern, dass bei geringer Schwingungsneigung Handhabung und Genauigkeit des Ejektor-Tiefbohrwerkzeugs dennoch nicht beeinträchtigt werden. Zudem soll das Ejektor-Tiefbohrwerkzeug konstruktiv einfach ausgebildet sein.

Die Erfindung löst die gestellte Aufgabe dadurch, dass der Schwingungsdämpfer im, zur Zufuhr und Führung des Kühl/Schmiermittels zum Bohrkopf des Ejektor-Tiefbohrwerkzeugs ausgebildeten Ringraum zwischen Außen- und Innenrohr vorgesehen ist und diese beiden gegeneinander abstützt.

Ist der Schwingungsdämpfer im zur Zufuhr und Führung des Kühl/Schmiermittels zum Bohrkopf des Ejektor-Tiefbohrwerkzeugs ausgebildeten Ringraum zwischen Außen- und Innenrohr vorgesehen, muss durch Vermeidung schwingungsdämpfender Maßnahmen an der Außenseite des Ejektor-Tiefbohrwerkzeugs - keine Beeinträchtigung der Handhabung des Ejektor-Tiefbohrwerkzeugs in Kauf genommen werden. Der erfindungsgemäße Schwingungsdämpfer verändert nämlich nicht die Außenkontur des Bohrrohrs bzw. des Werkzeugs, wodurch wiederum eine unerwünschte Berührung von Werkstück und Werkzeug ausgeschlossen werden kann. Stützt zudem der Schwingungsdämpfer Außen- und Innenrohr gegeneinander ab, können störende oder sogar schädigende Schwingungen deutlich reduziert werden - bzw. kann deren Entstehung gänzlich vermieden werden. Dies kann insbesondere auch zu einer reduzierten Abgabe von Bohrgeräuschen während der Bearbeitung eines Werkstücks führen. Außerdem kann durch solch ein Abstützen eine Verschiebung der Eigenfrequenzen am Ejektor-Tiefbohrwerkzeug ermöglicht werden, was zur Verbesserung der Laufruhe des Ejektor-Tiefbohrwerkzeugs beitragen kann. Zudem bedarf es für diese erfindungsgemäße Lösung keine erhöhten konstruktiven Maßnahme am Ejektor-Tiefbohrwerkzeugs, weil der Schwingungsdämpfer im für die Strömung des Kühl/Schmiermittels offenen Ringraum verhältnismäßig einfach vorgesehen werden kann. Das erfindungsgemäße, besonders schwingungsarme Ejektor-Tiefbohrwerkzeug kann sich daher nicht nur durch seine einfache Handhabung sowie konstruktive Einfachheit auszeichnen, sondern auch eine hohe Genauigkeit bei der Bearbeitung eines Werkstücks zulassen.

Stützt der Schwingungsdämpfer Außen- und Innenrohr gegeneinander unter Vorspannung ab, können damit Außen- und Innenrohr gegeneinander verspannt werden. Damit kann beispielsweise ein sich beim Tiefbohren ergebendes Spiel zwischen Schwingungsdämpfer und den beiden Rohren ausgeglichen werden und damit stets eine Schwingungskompensation für ein schwingungsarmes Ejektor-Tiefbohrwerkzeug gewährleistet werden.

Konstruktiv einfach kann das gegenseitige Verspannen von Außen- und Innenrohr erreicht werden, wenn der Schwingungsdämpfer aufgrund seiner elastischen Verformung Außen- und Innenrohr gegeneinander verspannt. Dies kann beispielsweise durch ein entsprechendes Übermaß des Schwingungsdämpfers erreicht werden. Durch solch eine elastische Verformung ist es auch möglich, die Vorspannung zwischen Außen- und Innenrohr bei niederfrequenten Schwingungen am Ejektor-Tiefbohrwerkzeugs sicherzustellen. Die Standfestigkeit eines Ejektor-Tiefbohrwerkzeugs kann auf diese Weise weiter erhöht werden. Außerdem kann durch die elastische Verformung auch die Spannkraft festgelegt werden, was wiederum eine flexible Einstellung der Schwingungsdämpfung auf verschiedenste Parameter beim Tiefbohren erlauben kann. Somit kann sich das erfindungsgemäße Ejektor-Tiefbohrwerkzeug unter anderem auch durch vielseitige Anwendbarkeit bzw. variable Abstimmung auf die gegebenen Erfordernisse auszeichnen.

Die schallerzeugende Schwingungsneigung des Ejektor-Tiefbohrwerkzeugs kann weiter reduziert werden, wenn der Schwingungsdämpfer Außen- und Innenrohr radial gegeneinander abstützt.

Die Konstruktion eines Ejektor-Tiefbohrwerkzeugs kann vereinfacht werden, wenn der Schwingungsdämpfer am Außen- und/oder Innenrohr befestigt ist. Zudem kann damit sichergestellt werden, dass der Schwingungsdämpfer beim Tiefbohren an seiner vorgesehenen Stelle verbleibt - dies selbst in jenen Fällen, in denen auf das Ejektor-Tiefbohrwerkzeug vergleichsweise hohe Schwingungsbelastungen wirken und so mit erhöhten Änderungen der geometrischen Verhältnisse im Ringraum zwischen Außen- und/oder Innenrohr gerechnet werden müsste. Die Standfestigkeit des Ejektor-Tiefbohrwerkzeugs kann dadurch weiter erhöht werden.

Vergleichsweise einfache Bedingungen zum Befestigen des Schwingungsdämpfers können sich ergeben, wenn das Außen- und/oder das Innenrohr einen in den Ringraum ragenden Vorsprung mit einem Hinterschnitt aufweist, in welchen der Schwingungsdämpfer formschlüssig zu seiner Befestigung eingreift. Zudem lässt sich auf diese Weise der Schwingungsdämpfer auch einfach montieren bzw. ist dieser für Wartungszwecke einfach austauschbar - womit sich die Handhabung des Ejektor-Tiefbohrwerkzeugs weiter erleichtern kann.

Konstruktiv einfache Verhältnisse am Ejektor-Tiefbohrwerkzeug können sich ergeben, wenn der Vorsprung pilzkopfförmig ausgebildet ist.

Ist der Schwingungsdämpfer als O-Ring ausgebildet, kann eine kostengünstige, aber dennoch robuste gegenseitige Abstützung von Außen- und Innenrohr sichergestellt werden.

Entsprechend der geforderten Dämpfungswirkung am Ejektor-Tiefbohrwerkzeug können mehrere in einem Winkel zueinander und/oder axial versetzte Schwingungsdämpfer im Ringraum vorgesehen sein.

Die schallabgebende Schwingungsneigung am Ejektor-Tiefbohrwerkzeug kann besonders gut reduziert werden, wenn mehrere um 120 Grad im Winkel zueinander versetzte Schwingungsdämpfer im Ringraum vorgesehen sind.

Die Strömungsverhältnisse im Ringraum können unbeeinträchtigt bleiben, wenn der Schwingungsdämpfer im Ringraum mit Kühl/Schmiermittel umfließbar vorgesehen ist.

In den Figuren ist beispielsweise der Erfindungsgegenstand anhand einer Ausführungsvariante dargestellt. Es zeigen
- Fig. 1: eine teilweise aufgerissene Seitenansicht auf ein teilweise dargestelltes Ejektor-Tiefbohrwerkzeug und
- Fig. 2: eine Schnittansicht nach II-II der Fig. 1.

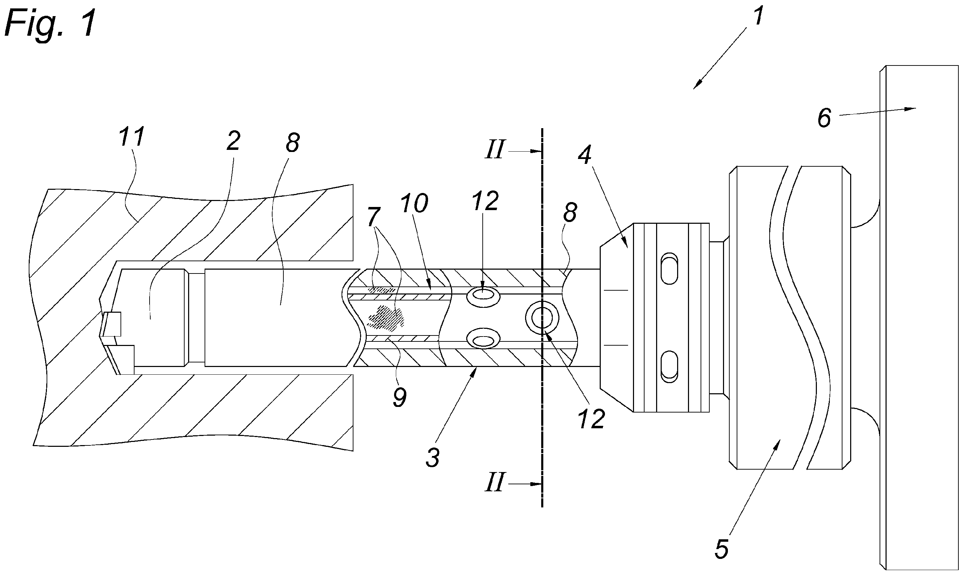

Beim beispielsweise nach Fig. 1 dargestellten Ejektor-Tiefbohrwerkzeug 1 ist ein auswechselbarer Bohrkopf 2, ein Bohrrohr 3, ein Spannfutter 4, ein Anschlussstück 5 und ein Flansch 6 zu erkennen. Das Bohrrohr 3 dient neben seiner tragenden und führenden Funktion des Bohrkopfs 2 auch zur Zu- und Abfuhr eines beim Tiefbohren benötigten Kühl/Schmiermittels 7, das in Fig. 1 nur teilweise dargestellt ist. Für Letzteres weist das Bohrrohr 3 ein Außenrohr 8 und ein Innenrohr 9 auf. Zwischen Außenrohr 8 und ein Innenrohr 9 bildet sich ein Ringraum 10 aus, über welchen Kühl/Schmiermittels 7 zum Bohrkopf 2 geführt wird. Der Ringraum 10 bildet daher einen Strömungskanal für das Kühl/Schmiermittel 7 aus, das anschließend den Bohrkopf 2 umspült und im Innenrohr 9 wieder mit, vom Werkstück 11 abgetragenen Spänen zurückfließt.

Um eine vom Tiefbohren bekannte hohe Geräuschbelastung zu reduzieren, weist das Ejektor-Tiefbohrwerkzeug 1 einen am Außenrohr 8 angreifenden Schwingungsdämpfer 12 auf. Dieser Schwingungsdämpfer 12 ist erfindungsgemäß im Ringraum 10 zwischen Außen- und Innenrohr 8, 9 vorgesehen, welcher Ringraum 10 das Kühl/Schmiermittel 7 zum Bohrkopf 2 führt. Zudem stützt der Schwingungsdämpfer 12 auch Außen- und Innenrohr 8, 9 gegeneinander radial ab. Auf diese Weise kann die Eigenfrequenz des Ejektor-Tiefbohrwerkzeugs 1 in einen für das Tiefbohren unkritischen Frequenzbereich verschoben werden, was ein vergleichsweise geräuscharmes Tiefbohren zulässt. Zudem ermöglicht diese erfindungsgemäße Konstruktion auch eine präzisere Bearbeitung eines Werkstücks und verbessert damit auch die Standfestigkeit des Bohrkopfs 2. Zudem entsteht damit auch eine konstruktive Einfachheit am Ejektor-Tiefbohrwerkzeugs 1, da der Schwingungsdämpfer 12 im Ringraum 10 vorgesehen wird, der als Strömungskanal für das Kühl/Schmiermittel 7 über die Ringraumlänge ausreichende Befestigungsoptionen bietet.

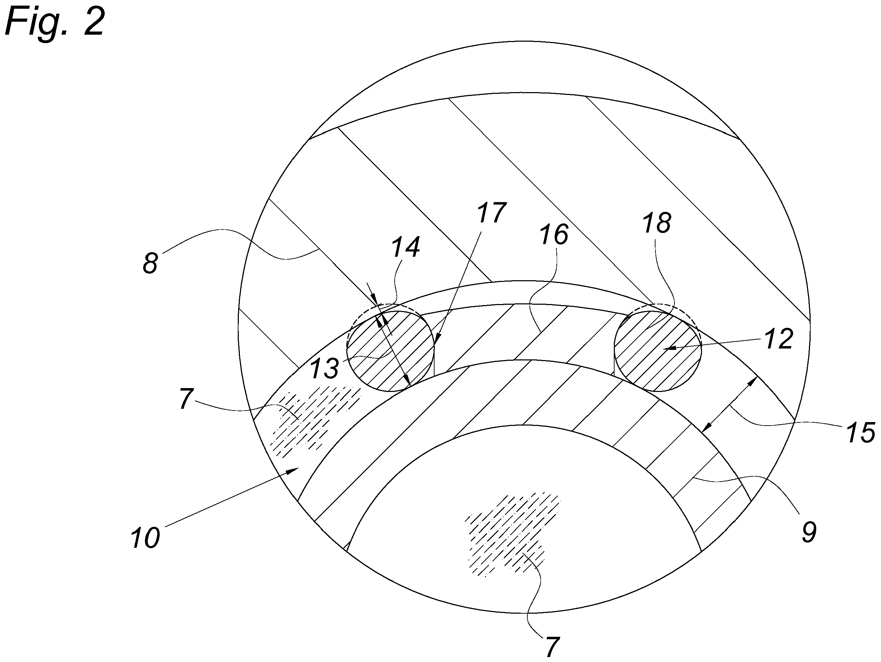

Wie in Fig. 2 insbesondere zu erkennen, stützt der Schwingungsdämpfer 12 Außen- und Innenrohr 8, 9 gegeneinander unter elastischer Vorspannung ab, nämlich in dem der elastische Schwingungsdämpfer 12 in seiner Höhe 13 ein Übermaß 14 gegenüber der Ringraumhöhe 15 des Ringraums 10 aufweist. Dieses Übermaß ist in Fig. 2 anhand der oberen Abflachung am Schwingungsdämpfer 12 zu erkennen, welche Abflachung sich durch dessen Verformung - insbesondere durch eine Verringerung seiner Höhe - ergibt. Damit wird erreicht, dass der Schwingungsdämpfer 12 Außen- und Innenrohr 8, 9 abschnittsweise gegeneinander verspannt, was die Schallabgabe des Ejektor-Tiefbohrwerkzeugs 1 beim Tiefbohren besonders verringert.

Der Schwingungsdämpfer 12 ist am Innenrohr 9 befestigt, wofür das Innenrohr 9 einen in den Ringraum 10 ragenden Vorsprung 16 mit einem Hinterschnitt 17 ausbildet. Der Vorsprung ist in der Höhe geringer als die Ringraumhöhe 15 des Ringraums 10. In den Hinterschnitt 17 greift der Schwingungsdämpfer 12 formschlüssig ein. Die formschlüssige Verbindung zwischen Hinterschnitt 17 und Schwingungsdämpfer 12 erlaubt eine sichere Positionierung des Schwingungsdämpfers 12 im Ringraum 10 bzw. hält diesen sicher am Innenrohr 9.

Der Schwingungsdämpfers 12 steht dem Hinterschnitt 17 vor. Wie zudem in der Fig. 2 zu erkennen, weist dieser Vorsprung 16 die Form eines Pilzkopfes auf. Anhand dieser Form lässt sich nämlich ein als O-Ring 18 ausgebildeter Schwingungsdämpfer 12 standfest befestigen, was die Standfestigkeit des Ejektor-Tiefbohrwerkzeugs 1 erhöht.

Zudem hat ein O-Ring 18 die vorteilhafte Eigenschaft, auf die Strömung des Kühl/Schmiermittels 7 einen geringen Einfluss zu nehmen, wodurch beispielsweise eine turbulente Strömung im Ringraum 10 beispielsweise verhindert werden kann.

Des Weiteren ist in Fig. 1 zu erkennen, das mehrere im Winkel zueinander und axial versetzte Schwingungsdämpfer 12 im Ringraum 10 vorgesehen sind, was die Schwingungsdämpfung weiter verbessert. Insbesondere hat sich ein Versatz der Schwingungsdämpfer 12 um 120 Grad (Mittelpunktswinkel) als besonders lärmreduzierend herausgestellt.

Im Allgemeinen wird erwähnt, dass durch den im Ringraum 10 radial verlaufenden Schwingungsdämpfer 12 sich eine stegartige Ausbildung ergibt. Diese konstruktive Ausbildung kann beispielsweise ohne weiteres von Kühl/Schmiermittel 7 umflossen werden, so dass auch mit einer Beeinträchtigung des Strömungsverhaltens nicht zu rechnen ist. Im Allgemeinen wird weiter erwähnt, dass ein Schwingungsdämpfer 12 oder mehrere Schwingungsdämpfer 12 im Ringraum 10, und zwar damit zwischen Anfang und Ende des als Strömungskanal für das Kühl/Schmiermittel 7 dienenden Ringraums 10, vorgesehen sein kann bzw. können.

Bekanntermaßen kann über das Anschlussstück 5 Kühl/Schmiermittel 7 in den Ringraum 10 eingebracht werden. Das Spannfutter 4 hält das Bohrrohr 3 am Flansch 6, der eine zentrische Öffnung zum Austragen des vom Innenrohr 9 rückgeführten Kühl/Schmiermittel 7 mit eventuell mitgeführten Spänen aufweist, was nicht näher dargestellt worden ist.

## Patentansprüche

1. Ejektor-Tiefbohrwerkzeug mit einem Bohrkopf (2), mit einem den Bohrkopf (2) tragenden Bohrrohr (3), das zur Führung von Kühl/Schmiermittel (7) ein Außenrohr (8) und ein Innenrohr (9) aufweist, die zwischen einander einen Ringraum (10) zur Zufuhr und Führung des Kühl/Schmiermittels (7) zum Bohrkopf (2) des Ejektor-Tiefbohrwerkzeugs (1) ausbilden, und mit mindestens einem am Außenrohr (8) angreifenden Schwingungsdämpfer (12), **dadurch gekennzeichnet, dass** der Schwingungsdämpfer (12) im, zur Zufuhr und Führung des Kühl/Schmiermittels (7) zum Bohrkopf (2) des Ejektor-Tiefbohrwerkzeugs (1) ausgebildeten Ringraum (10) zwischen Außen- und Innenrohr (8, 9) vorgesehen ist und diese beiden gegeneinander abstützt.

2. Ejektor-Tiefbohrwerkzeug nach Anspruch 1, **dadurch gekennzeichnet, dass** der Schwingungsdämpfer (12) Außen- und Innenrohr (8, 9) gegeneinander unter Vorspannung abstützt und damit gegeneinander verspannt.

3. Ejektor-Tiefbohrwerkzeug nach Anspruch 2, **dadurch gekennzeichnet, dass** der Schwingungsdämpfer (12) aufgrund seiner elastischen Verformung Außen- und Innenrohr (8, 9) gegeneinander verspannt.

4. Ejektor-Tiefbohrwerkzeug nach Anspruch 1, 2 oder 3, **dadurch gekennzeichnet, dass** der Schwingungsdämpfer (12) Außen- und Innenrohr (8, 9) radial gegeneinander abstützt.

5. Ejektor-Tiefbohrwerkzeug nach einem der Ansprüche 1 bis 4, **dadurch gekennzeichnet, dass** der Schwingungsdämpfer (12) am Außen- und/oder Innenrohr (8, 9) befestigt ist.

6. Ejektor-Tiefbohrwerkzeug nach Anspruch 5, **dadurch gekennzeichnet, dass** das Außen- und/oder das Innenrohr (8, 9) einen in den Ringraum (10) ragenden Vorsprung (16) mit einem Hinterschnitt (17) aufweist, in welchen der Schwingungsdämpfer (12) formschlüssig zu seiner Befestigung eingreift.

7. Ejektor-Tiefbohrwerkzeug nach Anspruch 6, **dadurch gekennzeichnet, dass** der Vorsprung (16) pilzkopfförmig ausgebildet ist.

8. Ejektor-Tiefbohrwerkzeug nach einem der Ansprüche 1 bis 7, **dadurch gekennzeichnet, dass** der Schwingungsdämpfer (12) als O-Ring (18) ausgebildet ist.

9. Ejektor-Tiefbohrwerkzeug nach einem der Ansprüche 1 bis 8, **dadurch gekennzeichnet, dass** mehrere in einem Winkel zueinander und/oder axial versetzte Schwingungsdämpfer (12) im Ringraum (10) vorgesehen sind.

10. Ejektor-Tiefbohrwerkzeug nach Anspruch 9, **dadurch gekennzeichnet, dass** mehrere um 120 Grad im Winkel zueinander versetzte Schwingungsdämpfer (12) im Ringraum (10) vorgesehen sind.

11. Ejektor-Tiefbohrwerkzeug nach einem der Ansprüche 1 bis 10, **dadurch gekennzeichnet, dass** der Schwingungsdämpfer (12) im Ringraum (10) mit Kühl/Schmiermittel (7) umfließbar vorgesehen ist.

## Claims

1. Ejector deep-drilling tool having a drilling head (2), having a drill pipe (3) which carries the drilling head (2) and which, in order to guide coolant/lubricant (7), has an outer pipe (8) and an inner pipe (9) which between them form an annular space (10) for supplying and guiding the coolant/lubricant (7) to the drilling head (2) of the ejector deep-drilling tool (1), and having at least one vibration damper (12) which acts on the outer pipe (8), **characterized in that** the vibration damper (12) is provided in the annular space (10) between the outer and inner pipe (8, 9), which is designed for supplying and guiding the coolant/lubricant (7) to the drilling head (2) of the ejector deep-drilling tool (1), and supports said two pipes against one another.

2. Ejector deep-drilling tool according to claim 1, **characterized in that** the vibration damper (12) supports the outer and inner pipe (8, 9) against one another under prestress and thus braces them against one another.

3. Ejector deep-drilling tool according to claim 2, **characterized in that** the vibration damper (12) braces the outer and inner pipe (8, 9) against one another on account of its elastic deformation.

4. Ejector deep-drilling tool according to claim 1, 2 or 3, **characterized in that** the vibration damper (12) supports the outer and inner pipe (8, 9) against one another radially.

5. Ejector deep-drilling tool according to any one of claims 1 to 4, **characterized in that** the vibration damper (12) is fastened to the outer and/or inner pipe (8, 9).

6. Ejector deep-drilling tool according to claim 5, **characterized in that** the outer and/or inner pipe (8, 9) has a protrusion (16), protruding into the annular space (10), with an undercut (17), in which the vibration damper (12) engages with a form fit for fastening purposes.

7. Ejector deep-drilling tool according to claim 6, **characterized in that** the protrusion (16) is mushroom-shaped.

8. Ejector deep-drilling tool according to any one of claims 1 to 7, **characterized in that** the vibration damper (12) is designed as an O-ring (18).

9. Ejector deep-drilling tool according to any one of claims 1 to 8, **characterized in that** a plurality of vibration dampers (12) are provided in the annular space (10), these being offset from one another by an angle and/or axially.

10. Ejector deep-drilling tool according to claim 9, **characterized in that** a plurality of vibration dampers (12) are provided in the annular space (10), these being offset from one another by an angle of 120 degrees.

11. Ejector deep-drilling tool according to any one of claims 1 to 10, **characterized in that** the vibration damper (12) is provided in the annular space (10) in such a way that coolant/lubricant (7) can flow therearound.

## Revendications

1. Outil de forage profond à éjecteur avec une tête de forage (2), avec un tube de forage (3) qui porte la tête de forage (2) et qui présente un tube extérieur (8) et un tube intérieur (9) pour le guidage d'un fluide de refroidissement/lubrification (7), qui forment entre eux un espace annulaire (10) pour l'amenée et le guidage du fluide de refroidissement/lubrification (7) vers la tête de forage (2) de l'outil de forage profond à éjecteur (1), et avec au moins un amortisseur de vibrations (12) agissant sur le tube extérieur (8), **caractérisé en ce que** l'amortisseur de vibrations (12) est prévu dans l'espace annulaire (10) entre les tubes extérieur et intérieur (8, 9) formé pour l'amenée et le guidage du fluide de refroidissement/lubrification (7) vers la tête de forage (2) de l'outil de forage profond à éjecteur (1), et soutient ceux-ci l'un contre l'autre.

2. Outil de forage profond à éjecteur selon la revendication 1, **caractérisé en ce que** l'amortisseur de vibrations (12) soutient les tubes extérieur et intérieur (8, 9) l'un contre l'autre sous précontrainte et les serre ainsi l'un contre l'autre.

3. Outil de forage profond à éjecteur selon la revendication 2, **caractérisé en ce que** l'amortisseur de vibrations (12) serre les tubes extérieur et intérieur (8, 9) l'un contre l'autre en raison de sa déformation élastique.

4. Outil de forage profond à éjecteur selon la revendication 1, 2 ou 3, **caractérisé en ce que** l'amortisseur de vibrations (12) soutient les tubes extérieur et intérieur (8, 9) radialement l'un contre l'autre.

5. Outil de forage profond à éjecteur selon l'une des revendications 1 à 4, **caractérisé en ce que** l'amortisseur de vibrations (12) est fixé au tube extérieur et/ou intérieur (8, 9).

6. Outil de forage profond à éjecteur selon la revendication 5, **caractérisé en ce que** le tube extérieur et/ou intérieur (8, 9) présente une saillie (16) faisant saillie dans l'espace annulaire (10) et ayant une contre-dépouille (17) dans laquelle l'amortisseur de vibrations (12) s'engage par complémentarité de forme pour sa fixation.

7. Outil de forage profond à éjecteur selon la revendication 6, **caractérisé en ce que** la saillie (16) est réalisée en forme de tête de champignon.

8. Outil de forage profond à éjecteur selon l'une des revendications 1 à 7, **caractérisé en ce que** l'amortisseur de vibrations (12) est réalisé sous la forme d'un joint torique (18).

9. Outil de forage profond à éjecteur selon l'une des revendications 1 à 8, **caractérisé en ce que** plusieurs amortisseurs de vibrations (12) décalés angulairement et/ou axialement les uns par rapport aux autres sont prévus dans l'espace annulaire (10).

10. Outil de forage profond à éjecteur selon la revendication 9, **caractérisé en ce que** plusieurs amortisseurs de vibrations (12) décalés d'un angle de 120 degrés les uns par rapport aux autres sont prévus dans l'espace annulaire (10).

11. Outil de forage profond à éjecteur selon l'une des revendications 1 à 10, **caractérisé en ce que** l'amortisseur de vibrations (12) est prévu dans l'espace annulaire (10) de manière à ce que le fluide de refroidissement/lubrification (7) puisse s'écouler autour de lui.
